# EUROPÄISCHE PATENTANMELDUNG

(11) **EP 2 133 400 A1**
(43) Veröffentlichungstag der Anmeldung: **16.12.2009**
(21) Anmeldenummer: 09159363.2
(22) Anmeldetag: 05.05.2009
(51) Int. Cl.: C09K 3/14

(54) **Ceroxid und partikuläres Additiv enthaltende Dispersion**

(30) Priorität: 10.06.2008 DE 102008002321
(71) Anmelder: Evonik Degussa GmbH, 45128 Essen (DE)
(72) Erfinder: Kröll, Michael, Dr., 63589 Linsengericht (DE)

(57) **Zusammenfassung**

Dispersion, die Ceroxidpartikel und ein oder mehrere nicht reaktive Partikel, die ausgewählt sind aus der Gruppe bestehend aus Metalloxiden, Metallnitriden, Metallcarbiden und organischen Polymeren, enthält, wobei
- die Dispersion einen pH-Wert von 3 bis 11 aufweist, wobei das Zetapotential der ausgewählten Partikel negativ und das der Ceroxidpartikel positiv oder gleich Null ist und das Zetapotential der Dispersion insgesamt negativ ist,
- der mittlere Durchmesser der
a) Ceroxidpartikel maximal 200 nm
b) ausgewählten Partikel weniger als 100 nm beträgt,

- der Anteil, jeweils bezogen auf die Gesamtmenge der Dispersion, an
c) Ceroxidpartikeln 0,1 bis 5 Gew.-% und
d) ausgewählten Partikeln 0,01 bis 10 Gew.-% ist.

## Beschreibung

Die Erfindung betrifft eine Ceroxid und ein oder mehrere partikuläre Additive enthaltende Dispersion, deren Herstellung und Verwendung.

Es ist bekannt Ceroxiddispersionen zum Polieren von Glas-, Metall- und dielektrischen Oberflächen einzusetzen und zwar sowohl zum Grobpolieren (hoher Abtrag, unregelmäßiges Profil, Kratzer) und zum Feinpolieren (geringer Abtrag, glatte Oberflächen, keine oder wenige Kratzer). Als nachteilig erweist sich dabei oft, dass Ceroxidpartikel und zu polierende Oberfläche die unterschiedliche elektrische Ladung tragen und sich dadurch anziehen. In Folge ist es aufwändig die Ceroxidpartikel von der polierten Oberfläche wieder zu entfernen.

In US 7112123 wird eine Dispersion zum Polieren von Glas-, Metall- und dielektrischen Oberflächen offenbart, welche als Abrasiv 0,1 bis 50 Gew.-% Ceroxidpartikel und 0,1 bis 10 Gew.-% Tonpartikel (englisch: clay abrasive particles) enthält, wobei 90% der Tonpartikel einen Partikeldurchmesser von 10 nm bis 10 µm und 90% der Ceroxidpartikel einen Partikeldurchmesser von 100 nm bis 10 µm aufweisen. Ceroxidpartikel, Tonpartikel und Glas als die zu polierende Oberfläche weisen dabei eine negative Oberflächenladung auf. Eine solche Dispersion ermöglicht einen wesentlich höheren Abtrag als eine nur auf Ceroxidpartikeln basierende Dispersion. Jedoch verursacht eine solche Dispersion eine hohe Defektrate.

Aus US 5891205 ist eine alkalische Dispersion bekannt, die Siliciumdioxid und Ceroxid enthält. Dabei ist die Partikelgröße der Ceroxidpartikel kleiner oder gleich der Größe der Siliciumdioxidpartikel. Die in der Dispersion vorliegenden Ceroxidpartikel stammen aus einem Gasphasenprozess, sind nicht aggregiert weisen eine Partikelgröße auf, die kleiner oder gleich 100 nm ist. Durch die Gegenwart von Ceroxidpartikeln und Siliciumdioxidpartikeln lässt sich laut US 5891205 die Abtragsrate drastisch steigern. Um dies zu erreichen, soll das Gewichtsverhältnis Siliciumdioxid/Ceroxid 7,5:1 bis 1:1 betragen. Das Siliciumdioxid weist bevorzugt eine Partikelgröße weniger als 50 nm und das Ceroxid eine von weniger als 40 nm auf. Zusammenfassend gilt, dass a) der Anteil an Siliciumdioxid größer ist als der Anteil an Ceroxid und b) die Siliciumdioxidpartikel größer sind als die Ceroxidpartikel.

Die in US5891205 offenbarte Dispersion ermöglicht einen wesentlich höheren Abtrag als eine nur auf Ceroxidpartikeln basierende Dispersion. Eine solche Dispersion ermöglicht einen wesentlich höheren Abtrag als eine nur auf Ceroxidpartikeln basierende Dispersion. Jedoch verursacht eine solche Dispersion eine hohe Defektrate.

In W02004/69947 wird ein Verfahren zum Polieren einer siliciumhaltigen dielektrischen Schicht offenbart, bei dem eine Dispersion eingesetzt wird, die als Abrasivpartikel Siliciumdioxid, Ceroxid oder eine Kombination der beiden und eine Aminosäure enthalten kann. Der pH-Wert der Dispersion muss 7 oder kleiner sein, um befriedigende Polierergebnisse zu erhalten.

Gewünscht sind Dispersionen, die eine hohe Abtragsrate bei geringer Defektrate und hoher Selektivität liefern. Nach dem Polieren und Reinigen der Wafer sollen nur geringe oder keine Ablagerungen mehr auf der Oberfläche zu finden sein.

Es wurde nun überraschend gefunden, dass die Aufgabe durch eine Dispersion gelöst wird, welche Ceroxidpartikel und ein oder mehrere nicht reaktive Partikel, die ausgewählt sind aus der Gruppe bestehend aus Metalloxiden, Metallnitriden, Metallcarbiden und organischen Polymeren, enthält, wobei
- die Dispersion einen pH-Wert von 3 bis 11 aufweist, wobei das Zetapotential der ausgewählten Partikel negativ und das der Ceroxidpartikel positiv oder gleich Null ist und das Zetapotential der Dispersion insgesamt negativ ist,
- der mittlere Durchmesser der
   a) Ceroxidpartikel maximal 200 nm
   b) ausgewählten Partikel weniger als 100 nm beträgt,
- der Anteil, jeweils bezogen auf die Gesamtmenge der Dispersion, an
   c) Ceroxidpartikeln 0,1 bis 5 Gew.-% und
   d) ausgewählten Partikeln 0,01 bis 10 Gew.-% ist.

Unter "nicht reaktiven" Partikeln sind solche zu verstehen, die bei Energieeintrag nicht mit Ceroxidpartikeln reagieren. Unter Energieeintrag ist der Eintrag von Energie während der Herstellung oder der Verwendung der Dispersion, beispielsweise in Form von Scherenergie, zu verstehen.

Die erfindungsgemäße Dispersion zeichnet sich dadurch aus, dass sie bei pH-Werten, bei denen das Ceroxid positiv oder neutral geladen ist, negativ geladen ist. Die ausgewählten Partikel reagieren nicht dem Ceroxid. Die erfindungsgemäße Dispersion erlaubt das Polieren von SiO₂-Oberfläche ohne dass eine Ablagerung des Ceroxids auf der negativ geladenen SiO₂-Oberfläche erfolgt.

Unter ausgewählten Partikeln sind solche zu verstehen, die ausgewählt sind aus der Gruppe bestehend aus Metalloxiden, Metallnitriden, Metallcarbiden und organischen Polymeren. Bevorzugt können die ausgewählten Partikel gamma-Al₂O₃, gamma-AlOOH, Cr₂O₃, Fe₂O₃, Fe₃O₄, MnO₂, Polystyrol, Sb₂O₅, SiC, Si₃N₄, SnO₂, Ta₂O₅, TiO₂, TlO₂, V₂O₅, WO₃, ZnO und/oder 2rO₂ sein.

Die ausgewählten Partikel können in Form von untereinander unvernetzten Einzelpartikeln vorliegen. Diese können weiterhin an der Oberfläche Hydroxylgruppen aufweisen.

Die Ceroxidpartikel können dabei als isolierte Einzelpartikel wie auch in Form aggregierter Primärpartikel vorliegen. Vorzugsweise enthält die erfindungsgemäße Dispersion überwiegend oder vollständig aggregierte Ceroxidpartikel.

Die erfindungsgemäße Dispersion weist bevorzugt ein Zetapotential von -20 bis -100 mV und besonders bevorzugt eines von -25 bis -50 mV auf.

Das Zetapotential ist ein Maß für die Oberflächenladung der Partikel. Unter Zetapotential ist das Potential an der Scherebene innerhalb der elektrochemischen Doppelschicht Partikel/Elektrolyt in der Dispersion zu verstehen. Eine wichtige Größe im Zusammenhang mit dem Zetapotential ist der isoelektrische Punkt (IEP) für einen Partikel. Der IEP gibt den pH-Wert an, bei dem das Zetapotential Null ist. Je größer das Zetapotential desto stabiler ist die Dispersion.

Die Ladungsdichte an der Oberfläche kann beeinflusst werden durch Veränderung der Konzentration der potentialbestimmenden Ionen im umgebenden Elektrolyten.

Partikel aus dem gleichen Material werden das gleiche Vorzeichen der Oberflächenladungen besitzen und sich somit abstoßen. Wenn das Zetapotential zu klein ist, kann die abstoßende Kraft jedoch nicht die van der Waals-Anziehung der Partikel kompensieren und es kommt zu Flockung und gegebenenfalls Sedimentation der Partikel.

Das Zetapotential kann beispielsweise bestimmt werden durch Messung des kolloidalen Vibrationsstroms (CVI) der Dispersion oder durch Bestimmung der elektrophoretischen Mobilität.

Weiterhin kann das Zetapotentials mittels der Elektrokinetischen Schallamplitude (ESA) bestimmt werden.

Der pH-Wert der erfindungsgemäßen Dispersion beträgt 3 bis 11.

In einer besonderen Ausführungsform der Erfindung enthält die Dispersion als ausgewählte Partikel Fe₂O₃, Sb₂O₅, SiC, Ta₂O₅, V₂O₅ und/oder WO₃ und der pH-Wert ist 3 ≤ ph 11.

In einer weiteren besonderen Ausführungsform der Erfindung enthält die Dispersion als ausgewählte Partikel Fe₂O₃, MnO₂, Polystyrol, Sb₂O₅, SiC, SnO₂, TiO₂, Ta₂O₅, V₂O₅, WO₃ und/oder ZrO₂ und der pH-Wert ist 4 < pH ≤ 11 ist.

In einer weiteren besonderen Ausführungsform der Erfindung enthält die Dispersion als ausgewählte Partikel Cr₂O₃, Fe₂O₃, Fe₃O₄, MnO₂, Polystyrol, Sb₂O₅, SiC, Si₃N₄, SnO₂, TiO₂, Ta₂O₅, V₂O₅, WO₃ und/oder 2rO₂ und der pH-Wert ist 6 < ph ≤ 11.

In einer weiteren besonderen Ausführungsform der Erfindung enthält die Dispersion als ausgewählte Partikel gamma-Al₂O₃, gamma -AlOOH, Cr₂O₃ Fe₂O₃, Fe₃O₄, MnO₂, Polystyrol, Sb₂O₅, SiC, Si₃N₄, SnO₂, TiO₂, Ta₂O₅, V₂O₅, WO₃, ZnO und/oder ZrO₂ und der pH-Wert ist 7 < ph ≤ 11.

In einer weiteren besonderen Ausführungsform der Erfindung enthält die Dispersion als ausgewählte Partikel gamma-Al₂O₃, gamma-AlOOH, Cr₂O₃, Fe₂O₃, Fe₃O₄, MnO₂, Polystyrol, Sb₂O₅, SiC, Si₃N₄, SnO₂, Ta₂O₅, TiO₂, TlO₂, V₂O₅, WO₃, ZnO und/oder 2rO₂ und der pH-Wert ist 8 < ph ≤ 11.

Der Anteil an ausgewählten Partikeln beträgt 0,01 bis 10 Gew.-% und bevorzugt 0,05 bis 0,5 Gew.-%, jeweils bezogen auf die Dispersion.

Weiterhin kann eine erfindungsgemäße Dispersion bevorzugt sein, in der außer Ceroxidpartikeln und ausgewählten Partikeln keine weiteren Partikel vorliegen.

Der mittlere Partikeldurchmesser der Ceroxidpartikel in der erfindungsgemäßen Dispersion beträgt maximal 200 nm. Bevorzugt ist ein Bereich von 40 bis 90 nm. In diesem Bereich ergeben sich bei Polierprozessen bezüglich Abtrag, Selektivität und Defektrate die besten Ergebnisse.

In der erfindungsgemäßen Dispersion ist der mittlere Partikeldurchmesser der Ceroxidpartikel bevorzugt größer als der der ausgewählten Partikel. Insbesondere ist eine Ausführungsform der erfindungsgemäßen Dispersion bevorzugt, in der der mittlere Partikeldurchmesser der Ceroxidpartikel 40 bis 90 nm und der ausgewählten Partikel 5 bis 35 nm ist.

Die Ceroxidpartikel können dabei als isolierte Einzelpartikel wie auch in Form aggregierter Primärpartikel vorliegen. Vorzugsweise enthält die erfindungsgemäße Dispersion aggregierte Ceroxidpartikel beziehungsweise die Ceroxidpartikel liegen überwiegend oder vollständig in aggregierter Form vor.

Als besonders geeignet haben sich dabei Ceroxidpartikel erwiesen, die auf ihrer Oberfläche und in oberflächennahen Schichten Carbonatgruppen enthalten. Insbesondere solche wie sie in DE-A-102005038136 offenbart sind. Dabei handelt es sich um Ceroxidpartikel die
- eine BET-Oberfläche von 25 bis 150 m²/g besitzen,
- die Primärpartikel einen mittleren Durchmesser von 5 bis 50 nm aufweisen,
- die oberflächennahe Schicht der Primärpartikel eine Tiefe von ca. 5 nm aufweist,
- in der oberflächennahen Schicht die Carbonatkonzentration ausgehend von der Oberfläche, auf der die Carbonatkonzentration am höchsten ist, nach innen abnimmt,
- der von den Carbonatgruppen herrührende Kohlenstoffgehalt auf der Oberfläche 5 bis 50 Flächenprozent beträgt und in der oberflächennahen Schicht in einer Tiefe von ca. 5 nm 0 bis 30 Flächenprozent beträgt
- der Gehalt an Ceroxid, gerechnet als CeO₂ und bezogen auf das Pulver, mindestens 99,5 Gew.-% beträgt und
- der Gehalt an Kohlenstoff, umfassend organischen und anorganischen Kohlenstoff, 0,01 bis 0,3 Gew.-%, bezogen auf das Pulver, beträgt.

Die Carbonatgruppen im können sowohl an der Oberfläche als auch in einer Tiefe bis ca. 5 nm der Ceroxidpartikel nachgewiesen werden. Die Carbonatgruppen sind dabei chemisch gebunden und können beispielsweise wie in den Strukturen a-c angeordnet sein.

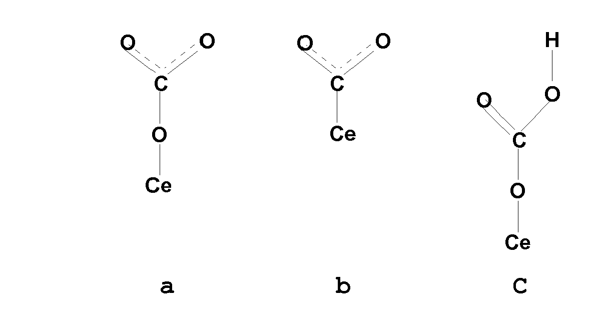

Die Carbonatgruppen können beispielsweise durch XPS/ESCA-Analyse nachgewiesen werden. Zum Nachweis der Carbonatgruppen in der oberflächennahen Schicht kann ein Teil der Oberfläche mittels Argonionenbeschuss abgetragen werden und die sich ergebende neue Oberfläche ebenfalls mittels XPS/ESCA (XPS = Röntgen-Photoelektronen-Spektroskopie; ESCA = Electron Spectroscopy for Chemical Analysis) analysiert werden.

Der Anteil an Natrium beträgt in der Regel nicht mehr als 5 ppm und an Chlor nicht mehr als 20 ppm. Die genannten Elemente sind in der Regel beim chemisch-mechanischen Polieren nur in geringen Mengen tolerierbar.

Die eingesetzten Ceroxidpartikel weisen bevorzugt eine BET-Oberfläche von 30 bis 100 m²/g und besonders bevorzugt von 40-80 m²/g auf.

Die ausgewählten Partikel der erfindungsgemäßen Dispersion weisen einen mittleren Partikeldurchmesser von weniger als 100 nm auf. Dabei ist der Bereich von 3 bis 50 nm bevorzugt und der Bereich von 10 bis 35 nm besonders bevorzugt.

Die flüssige Phase der erfindungsgemäßen Dispersion umfasst Wasser, organische Lösungsmittel und Mischungen von Wasser mit organischen Lösungsmitteln. In der Regel ist der Hauptbestandteil mit einem Anteil von >90 Gew.-% der flüssigen Phase Wasser.

Die erfindungsgemäße Dispersion kann weiterhin ein oder mehrere Aminocarbonsäure mit einem Anteil, in Summe, von 0,01 bis 5 Gew.-%, bezogen auf die Dispersion, enthalten. Vorzugsweise werden diese ausgewählt aus der Gruppe bestehend aus Alanin, 4-Aminobutancarbonsäure, 6-Aminohexancarbonsäure, 12-Aminolaurinsäure, Arginin, Asparaginsäure, Glutaminsäure, Glycin, Glycylglycin, Lysin und Prolin. Besonders bevorzugt ist Glutaminsäure und Prolin. Vorzugsweise beträgt der Anteil an Aminosäure oder deren Salz in der Dispersion 0,1 bis 0,6 Gew.-%.

Darüber hinaus kann die erfindungsgemäße Dispersion noch Säuren, Basen, Salze enthalten. Die Einstellung des pH-Wertes kann durch Säuren oder Basen erfolgen. Als Säuren können anorganische Säuren, organische Säuren oder Mischungen der vorgenannten Verwendung finden. Als anorganische Säuren können insbesondere Phosphorsäure, Phosphorige Säure, Salpetersäure, Schwefelsäure, Mischungen daraus, und ihre sauer reagierenden Salze Verwendung finden. Als organische Säuren finden bevorzugt Carbonsäuren der allgemeinen Formel CₙH₂ₙ₊₁CO₂H, mit n=0-6 oder n= 8, 10, 12, 14, 16, oder Dicarbonsäuren der allgemeinen Formel HO₂C(CH₂)ₙCO₂H, mit n=0-4, oder Hydroxycarbonsäuren der allgemeinen Formel R₁R₂C(OH)CO₂H, mit R₁=H, R₂=CH₃, CH₂CO₂H, CH(OH)CO₂H, oder Phthalsäure oder Salicylsäure, oder sauer reagierende Salze der vorgenannten Säuren oder Mischungen der vorgenannten Säuren und ihrer Salze. Eine Erhöhung des pH-Wertes kann durch Addition von Ammoniak, Alkalihydroxiden oder Aminen erfolgen.

Bei bestimmten Anwendungen kann es vorteilhaft sein, wenn die erfindungsgemäße Dispersion 0,3-20 Gew.-% eines Oxidationsmittels enthält. Hierfür kann Wasserstoffperoxid, ein Wasserstoffperoxid-Addukt, wie zum Beispiel das Harnstoff-Addukt, eine organische Persäure, eine anorganische Persäure, eine Iminopersäure, ein Persulfat, Perborat, Percarbonat, oxidierende Metallsalze und/oder Mischungen der vorgenannten eingesetzt werden. Besonders bevorzugt kann Wasserstoffperoxid eingesetzt werden. Aufgrund der verringerten Stabilität einiger Oxidationsmittel gegenüber anderen Bestandteilen der erfindungsgemäßen Dispersion kann es sinnvoll sein, dieses erst unmittelbar vor der Benutzung der Dispersion hinzuzufügen.

Die erfindungsgemäße Dispersion kann weiterhin Oxidationsaktivatoren beinhalten. Geeignete Oxidationsaktivatoren können in der Dispersion gelöst vorliegende Metallsalze von Ag, Co, Cr, Cu, Fe, Mo, Mn, Ni, Os, Pd, Ru, Sn, Ti, V und Mischungen daraus sein. Weiterhin sind Carbonsäuren, Nitrile, Harnstoffe, Amide und Ester geeignet. Besonders bevorzugt kann Eisen-II-nitrat sein. Die Konzentration des Oxidationskatalysators kann abhängig vom Oxidationsmittel und der Polieraufgabe in einem Bereich zwischen 0,001 und 2 Gew.-% variiert werden. Besonders bevorzugt kann der Bereich zwischen 0,01 und 0,05 Gew.-% sein.

Die Korrosionsinhibitoren, die in der Regel mit einem Anteil von 0,001 bis 2 Gew.-% in der erfindungsgemäßen Dispersion vorhanden sind, können Stickstoff enthaltende Heterocyclen wie Benzotriazol, substituierte Benzimidazole, substituierte Pyrazine, substituierte Pyrazole und deren Mischungen sein.

Die erfindungsgemäße Dispersion kann erhalten werden, idem man
a) in eine die ausgewählten Partikel enthaltende Vordispersion Ceroxidpartikel in Pulverform einbringt und nachfolgend dispergiert oder
b) eine Ceroxidpartikel enthaltende Vordispersion und eine die ausgewählten Partikel enthaltende Vordispersion zusammengibt und nachfolgend dispergiert und
c) gegebenenfalls nachfolgend dem Dispergierschritt der Varianten a) oder b) Oxidationsmittel, Oxidationskatalysator und/oder Korrosionsinhibitor hinzufügt.

Als Dispergieraggregate eignen sich insbesondere solche, die einen Energiedichte von mindestens 200 KJ/m³ bewirken. Hierzu zählen Systeme nach dem Rotor-Stator-Prinzip, zum Beispiel Ultra-Turrax-Maschinen, oder Rührwerkskugelmühlen. Höhere Energieeinträge sind mit einem Planetenkneter/-mixer möglich. Die Wirksamkeit dieses Systems ist jedoch mit einer ausreichend hohen Viskosität der bearbeiteten Mischung verbunden, um die benötigten hohen Scherenergien zum Zerteilen der Teilchen einzubringen.

Mit Hochdruckmühlen werden zwei unter hohem Druck stehende vordispergierte Suspensionsströme über eine Düse entspannt. Beide Dispersionsstrahlen treffen exakt aufeinander und die Teilchen mahlen sich selbst. Bei einer anderen Ausführungsform wird die Vordispersion ebenfalls unter hohen Druck gesetzt, jedoch erfolgt die Kollision der Teilchen gegen gepanzerte Wandbereiche. Die Operation kann beliebig oft wiederholt werden um kleinere Teilchengrößen zu erhalten.

Weiterhin kann der Energieeintrag auch mittels Ultraschall erfolgen.

Die Dispergier- und Mahlvorrichtungen können auch kombiniert eingesetzt werden. Oxidationsmittel und Additive können zu verschiedenen Zeitpunkten der Dispergierung zugeführt werden. Es kann auch von Vorteil sein, beispielsweise Oxidationsmittel und Oxidationsaktivatoren erst am Ende der Dispergierung, gegebenenfalls bei geringerem Energieeintrag einzuarbeiten.

Ein weiterer Gegenstand der Erfindung ist die Verwendung der erfindungsgemäßen Dispersion zum Polieren.

## Patentansprüche

1. Dispersion enthaltend Ceroxidpartikel und ein oder mehrere Partikel nicht reaktive Partikel, die ausgewählt sind aus der Gruppe bestehend aus Metalloxiden, Metallnitriden, Metallcarbiden und organischen Polymeren, wobei
- die Dispersion einen pH-Wert von 3 bis 11 aufweist, wobei das Zetapotential der ausgewählten Partikel negativ und das der Ceroxidpartikel positiv oder gleich Null ist und das Zetapotential der Dispersion insgesamt negativ ist,
- der mittlere Durchmesser der
- Ceroxidpartikel maximal 200 nm
- ausgewählten Partikel weniger als 100 nm beträgt,
- der Anteil, jeweils bezogen auf die Gesamtmenge der Dispersion, an
c) Ceroxidpartikeln 0,1 bis 5 Gew.-% und
d) ausgewählten Partikeln 0,01 bis 10 Gew.-% ist.

2. Dispersion nach Anspruch 1, **dadurch gekennzeichnet, dass** das Zetapotential der Dispersion -20 bis -100 mV ist.

3. Dispersion nach den Ansprüchen 1 oder 2, **dadurch gekennzeichnet, dass** der Anteil an Ceroxid 0,1 bis 5 Gew.-%, bezogen auf die Dispersion, ist.

4. Dispersion nach den Ansprüchen 1 bis 3, **dadurch gekennzeichnet, dass** der Anteil an ausgewählten Partikeln 0,01 bis 10 Gew.-%, bezogen auf die Dispersion, ist.

5. Dispersion nach den Ansprüchen 1 bis 4, **dadurch gekennzeichnet, dass** der mittlere Partikeldurchmesser der Ceroxidpartikel 40 bis 90 nm ist.

6. Dispersion nach den Ansprüchen 1 bis 5, **dadurch gekennzeichnet, dass** die Ceroxidpartikel auf ihrer Oberfläche und in oberflächennahen Schichten Carbonatgruppen enthalten.

7. Dispersion nach den Ansprüchen 1 bis 6, **dadurch gekennzeichnet dass** die ausgewählten Partikel einen mittleren Partikeldurchmesser von 3 bis 50 nm aufweisen.

8. Dispersion nach den Ansprüchen 1 bis 7, **dadurch gekennzeichnet, dass** der mittlere Partikeldurchmesser der Ceroxidpartikel 40 bis 90 nm und der ausgewählten Partikel 5 bis 35 nm ist.

9. Dispersion nach den Ansprüchen 1 bis 8, **dadurch gekennzeichnet, dass**, sie weiterhin 0,01 bis 5 Gew.-% einer oder mehrerer Aminocarbonsäure und/oder deren Salzen enthält.

10. Verwendung der Dispersion gemäß der Ansprüche 1 bis 9 zum Polieren von dielektrischen Oberflächen.
